# EUROPEAN PATENT SPECIFICATION

(11) **EP 0 635 423 B1**
(45) Date of publication and mention of the grant of the patent: **28.04.2004**
(21) Application number: 94111501.6
(22) Date of filing: 22.07.1994
(51) Int. Cl.: B62M 23/02, F16H 61/12

(54) **Muscle-operated vehicle**
Muskelgetriebenes Fahrzeug
Véhicule propulsé par la force musculaire

(30) Priority: 23.07.1993 JP 20195393
(43) Date of publication of application: 25.01.1995
(73) Proprietor: YAMAHA HATSUDOKI KABUSHIKI KAISHA, Iwata-shi Shizuoka-ken, 438 (JP)
(72) Inventor: Suganuma, Yasuo, c/o Yamaha Hatsudoki K. K., Iwata-shi, Shizuoka-ken (JP); Ikuma, Katsumi, c/o Yamaha Hatsudoki K. K., Iwata-shi, Shizuoka-ken (JP); Nagai, Sueji, c/o Yamaha Hatsudoki K. K., Iwata-shi, Shizuoka-ken (JP); Ito, Fumio, c/o Yamaha Hatsudoki K. K., Iwata-shi, Shizuoka-ken (JP); Miyata, Syoichiro, c/o Yamaha Hatsudoki K. K., Iwata-shi, Shizuoka-ken (JP)
(74) Representative: Grünecker, Kinkeldey, Stockmair & Schwanhäusser Anwaltssozietät

(56) References cited:
- EP-A- 0 273 387
- EP-A- 0 432 764
- EP-A- 0 517 224
- DE-A- 4 129 736

## Description

This invention relates to a muscle-operated vehicle, in particular pedal operated vehicle such as a bicycle, having a muscle-operated driving system and an auxiliary electrical power driving system, sensor means for detecting the vehicle speed and the human driving power for driving the vehicle and a control means for controlling the activation and/or the output of the electrical power driving system according to changes of the human driving power.

It has been proposed to provide a manually powered vehicle with an electric assist so as to assist the occupant in the manual propulsion of the vehicle. For example, the European patent applications 0 517 224 and 0 569 954 on which the preamble of claim 1 is based, show a manually powered vehicle such as a bicycle as indicated above, wherein there is provided an electric power assist for assisting the occupant in the powering of the vehicle. This type of mechanism includes an arrangement that senses the manual input force or torque exerted by the occupant and then powers an electric motor by connecting it to a battery in such a way so as to provide a degree of assist in proportion to the manual input force.

This type of vehicle has a large number of advantages. However, it is important to ensure that the amount of electrical power supplied to the electric motor cannot be too great under certain circumstances so as to permit the speed of the vehicle to become excessive. In addition, it should be ensured that the system will not permit the operator to bypass the control and operate the electric motor manually which might also result in excessive speed of the vehicle. The afore-noted copending applications disclose a number of ways in which these effects can be obtained.

In all of the systems disclosed in the afore-noted copending application, the control senses only abnormal variations in the force sensed and provides safety disconnect of the electric motor power in the event the force sensor becomes inoperative or is bypassed. Although this has a number of advantages, further improvements or alternative constructions may be desirable.

More specifially, from the afore-indicated arrangements it is known to detect the vehicle speed in addition to the pedal force so that an appropriate driving force of the electric motor is determined from both of the detected parameters. In an example of such an arrangement, the motor output and, therefore, the electric assist of the operator is limited when the vehicle speed exceeds a predetermined value even if the pedal force is great so that the vehicle speed is prevented from increasing excessively. In the afore-indicated control considering both pedal force and vehicle speed response with signals to control the motor output, the pedal force and the vehicle speed all synchronously detected and read by a control device. However, if an abnormality occurs to a malfunction of the sensors for the pedal force or for the vehicle speed or in the detection circuit, the detected values become abnormal and an appropriate motor control cannot be performed with such abnormal values on hand.

Accordingly, it is an object of the present invention to provide an improved muscle-operated vehicle having electric assist allowing to evaluate the detected signals responsive to the operational conditions of the vehicle and of the operators driving efforts before controlling the power assist of the associated electrical power system of the vehicle.

In order to perform said objective, the present invention provides muscle-operated vehicle according to claim 1.

In this way, preferably a self-diagnosis of the control and drive system and a fail-safe arrangement in view of the signals processed in the control of the electric motor of the auxiliary electrical power system can be provided in order to stop any activation of the assisting electric motor if the signals from a vehicle speed sensor or a human power representing sensor might reasonably be held faulty due to an internal difficulty or failure in the operational characteristics of the sensors or of the processing circuits of the control. In this way it is prevented that a drive force of the electric motor is inappropriate considering the instantaneous vehicle driving or operating conditions.

In the following the present invention is explained in greater detail by means of an embodiment thereof in conjunction with the accompanying drawings wherein:
Figure 1 is a partial side elevational view of an electric motor assisted, occupant propelled vehicle, in the form of a bicycle, constructed in accordance with an embodiment of the invention.
Figure 2 is a schematic block diagram showing the interrelationship of the various components of the drive system.
Figure 3 is a schematic view showing the electrical components of the system.
Figure 4 is a graphical view showing the different types of abnormalities which may exist, and
Figure 5 is a block diagram of a control routine which may be utilized to practice the invention.

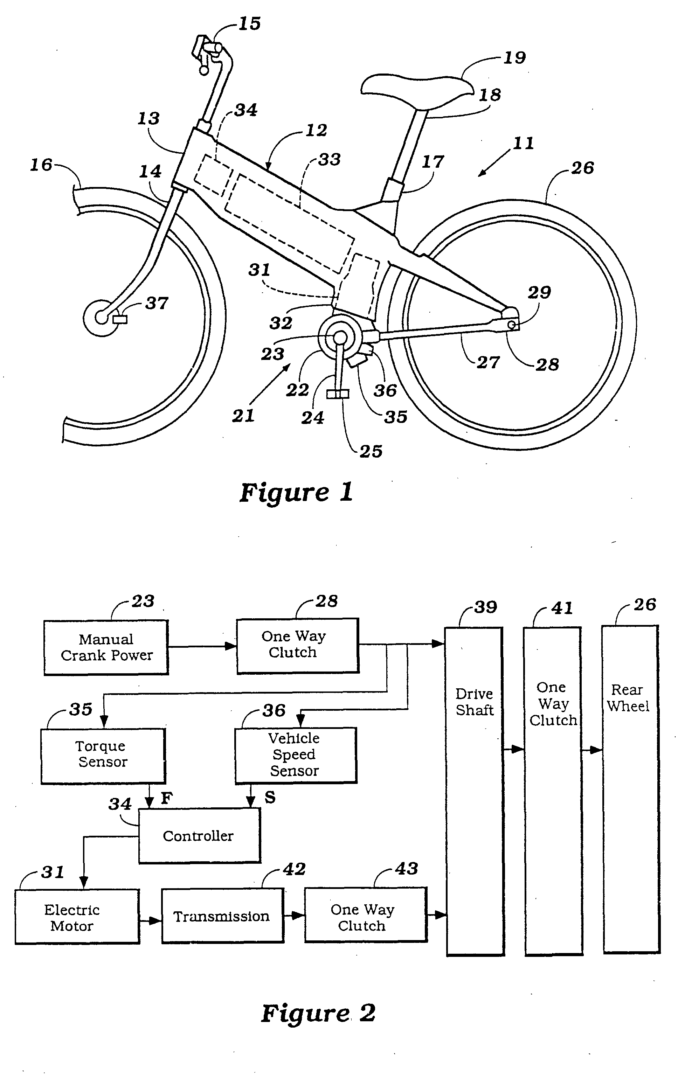

Referring now in detail to the drawings and initially to Figure 1, an occupant powered, electric power assisted vehicle in the form of a bicycle is depicted and identified generally by the reference numeral 11. Although the invention is described in conjunction with a bicycle, it will be readily apparent to those skilled in the art how the invention can be utilized with a wide variety of other types of occupant powered vehicles to provide electrical assist therefore.

The bicycle 11 includes a frame assembly, indicated generally by the reference numeral 12 and which includes a head pipe 13 that journals a front fork 14 for steering movement under the control of a handlebar assembly 15. A front wheel 16 is rotatably journalled by the front fork 14 in a well known manner.

A seat pillar 17 of the frame assembly 12 adjustably supports a seat post 18 on which a seat 19 is carried for accommodating an occupant.

A power unit, indicated generally by the reference numeral 21 is positioned at the lower end of the frame assembly 12 beneath the seat 19 and includes a bottom case 22 that rotatable journals a crankshaft 23 having a pair of crank arms 24 extending from its opposite sides and to which pedals 25 are journalled in a well-known manner. The pedals 25 may be operated by a rider seated on the seat 19 and the pedals drive a rear wheel 26 that is supported by the frame assembly 12 at the rear end of a pair of support arms 27 that have flattened portions 28 to receive an axle 29 associated with and journalling the rear wheel 26 in a known manner. The manner in which the crankshaft 23 drives the rear wheel 26 will be described generally later.

In addition to the manual or occupant control for drive of the rear wheel 26, there is also provided an electric motor and transmission assembly 31 that is mounted in a lower portion 32 of the frame 12 and which is coupled to the transmission arrangement, which will also be described later for electric power assist in the drive of the rear wheel 26.

The electric motor 31 of the permanent magnet direct current type receives power from a rechargeable battery 33 such as a lead-acid battery, that is mounted within the frame assembly and which power is supplied through a controller 34.

The control for determining the amount of electrical power supplied from the battery 33 through the controller 34 to the electric motor 31 is controlled in response to certain inputs including those of a force or torque sensor, indicated generally by the reference numeral 35 and a vehicle speed sensor 36 which is also connected with the drive assembly 21 detecting the rotary speed of a drive shaft.

Alternatively, a front wheel speed sensor 37 may be associated with the front wheel 16 for providing a speed signal to the control system.

Figure 2 shows the drive arrangement and certain elements of the control schematically. It should be noted that the drive assembly contains certain components which are disclosed in more detail in copending European patent application 0 569 954. Obviously, other types of drive arrangements may also be employed.

The drive arrangement includes a transmission that transmits power from the manual crankshaft 23 to the rear wheel 26 through a drive shaft (not shown) that extends through one of the frame tubes 27. This transmission includes a one-way clutch 38 which is disposed between the crankshaft 23 and the drive shaft. This transmission may further include a planetary speed reduction unit that includes a sun gear which is connected to the torque sensor 35 in a manner described in the copending application. It should be noted that this torque sensor senses actual torque exerted on the crankshaft 23 and not the force of the operator. The operator's force, although constant will provide a torque that varies cyclically depending upon the angle of the crank arms 24 as is well known. On the other hand, also a force sensor can be utilized.

The output from the one-way clutch 38 and tranmission is transmitted to the drive shaft, shown schematically at 39 in Figure 2 which, in turn, is coupled to the rear wheel 26 through a further transmission which includes a one-way or free-wheeling clutch, indicated schematically at 41 in Figure 2.

In greater detail, the lower portion 32 of the frame 12 is formed to be a cylindrical portion opening downward and accommodating the electric motor 31 therein. The power unit 21 comprises the bottom case 22 with the rear wheel supporting arms 27 extending backward from the bottom case 22. The crankshaft 23 is inserted through the bottom case 22 of the power unit 21 and the crank arms 24 are secured to both ends of the crankshaft 23 with the crank padels 25 attached thereto, respectively. The left end of the axle 29 is secured to an end plate 28 secured to the left hand frame tube 27. The right end of the axle 29 is secured to a bevel gear case (not shown) secured to the right-hand frame tube 27. The axle 29 supports a rotatable hub (not shown) to which the rotation of the bevel gear mechanism is transmitted through the one-way clutch 41. A bevel gear (not shown) is included in the power unit 21 to transmit the rotation of the crankshaft 23 to the drive shaft 39 through another one-way clutch 41 (see Figure 2). A planetary gear mechanism is interposed between the crankshaft 23 and the drive shaft 39.

Any pedal force is input from a planetary gear of the planetary mechanism and is output from a ring gear thereof to the drive shaft 39. The torque applied to a sun gear in the centre of the planetary gear mechanism is detected by a potentiometer which forms the torque sensor 35 to detect the pedal force or torque, respectively. The rotation of the electric motor 31 is transmitted to the drive shaft 39 through a transmission 42 and a one-way clutch 43. Figure 1 shows the chargeable battery 33 such as a lead-acid battery and the controller 34 both accommodated in the space extending in between the head pipe 13 and the seat pillar 17 of the main frame 12. Figure 1 also shows the vehicle speed sensor 36 for detecting the vehicle speed S from the rotary speed of the drive shaft 39. As indicated above alternatively (or even additionally if the signal proessing means is adapted accordingly for example by having a comparator means and/or an average value calculator) also a front wheel speed sensor 37 may be used to provide a bicycle speed responsive signal to the control system.

The pedal force F or torque Q detected by the potentiometer 35 and the vehicle speed S detected by the vehicle speed sensors 35 and/or 37 are input to the control means 34 which calculates a motor current of the electric motor 31 commensurate with an operating condition on the basis of the pedal force or torque and the vehicle speed. The motor current is controlled such as to comply with the calculated result and to produce a motor output or motor torque Tₘ.

The electric motor 31, as has been noted, drives a speed reducing transmission, shown schematically at 42 in Figure 2 and this may constitute a planetary transmission as shown in the application mentioned above. The transmission 42 drives the drive shaft 39 through the further one-way clutch, shown schematically at 43, which permits driving of the drive shaft 39 but whic will permit the drive shaft 39 to free wheel. Since this invention deals particularly with the manner in which the motor 31 is controlled and particularly during abnormal conditions, further description of the transmission may be used with a wide variety of types of transmissions.

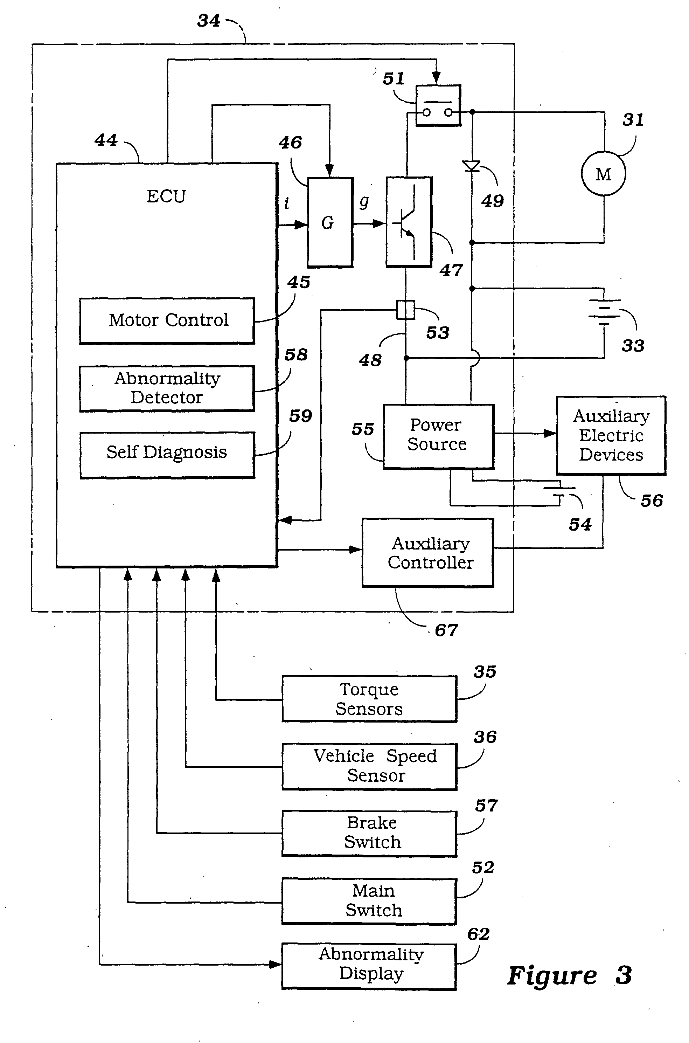

The control circuit is shown partially schematically in figure 3 and will now be described in more detail by reference to that figure. As seen in Figure 3, the controller 34 includes an ECU, indicated generally by the reference numeral 44 which has a motor control section, indicated by the reference numeral 45 that is preprogrammed so as to provide the appropriate degrees of electrical power to the motor 31 in response to the input of the manual crankshaft 23 by the operator on the seat 19 in any known type of control strategy, for example, those described in the afore-noted copending application for normal motor control. This control output i is transmitted to a gate circuit 46 which selectively switches circuit 47 by a signal g so as to vary the duty cycle time of electrical power supplied in the battery 33 to the motor 31 through a main circuit 48 in response to the varying conditions. The switch 47 may be a known type such as an MOS-FET. A diode 49 is provided in the circuit so as to avoid the backflow of EMF to the battery 33 during coasting modes. In addition, a main relay 51 is provided in the main circuit 47 and is switched on and off by a main switch 52. A power tap takes power out of the main circuit 48 and powers the ECU 44. As previously noted, the specfic normal control for the motor 31 may be of any known type and since this forms no part of the invention, a further description of it is not believed to be necessary.

The system further includes a small auxiliary battery 54 which is charged from the main battery 33 through a power source circuit 55 and which also supplies power to auxiliary electrical devices, shown at 56 in Figure 3 such as lights or the like.

The central processing unit ECU 44 outputs a command value i of the output torque T_{M} of the electric motor 31 according to the pedal force f or the corresponding torque and the vehicle speed S. More specifically, the command value i is output to periodically increase and decrease the output torque T_{M} of the electric motor 31 according to the periodical changes in the pedal force f or the corresponding torque. It is also possible to adapt the control unit 34 such that the vehicle speed, S is limited by limiting the motor output Tₘ when the vehicle speed S reaches a predetermined value.

The gate circuit 46 outputs the gate signal g for driving the switching circuit 47 corresponding to the command value or control output i of the ECU 44 with a changing duty ratio. That means the duty ratio or the duty cycle time (ratio of ON-time to ON + OFF-time of the control output i) is increased when the motor output T_{M} is to be increased.

The gate signal g output from the gate circuit 46 according to the control output i is supplied to the switching elements of the switching circuit 47 to said each element selectively to ON or OFF.

In Figure 3 the main switch 52 is shown. The main switch 52 is switched on, the ECU 44, after initial setting, that the main relay 51 interposed in the main circuit 48 to ON and at the same time set ready for start the power source circuit 55, the auxiliary controller 61, the gate circuit 46 and all other parts of the control unit 34. The power source circuit 55 causes the voltage of the battery 33 to be adapted for example by a switching regulator to produce a power voltage for the central processing unit 44 and drive voltages for the auxiliary electric devices 56. In the present case the auxiliary battery 54, separate from the main battery 33 and having a smaller capacity is connected to the power source circuit 55. Accordingly, the voltage of the main battery 33 is stepped down by a switching regulator to charge the auxiliary battery 54 of smaller capacity. The auxiliar electrical devices may include lamps and meters which are driven by the power of the power source circuit 55 according to the comment and output from the auxiliary control section 61.

A brake switch 57 is provided to detect the brake operation and provides a brake signal to the ECU 44 which, in turn brings to zero or limits the motor output T_{M} according to the brake signal even if the pedal force F or torque exceeds a predetermined value. Accordingly the system may also be provided with an arrangement for precluding the transmission of power to the electric motor 31 and the brakes of the bicycle 11 are energised and for this purpose the brake switch 57 is provided that is connected to the ECU 44 and which will disable the gate circuit 46 and prevent energisation of the electric motor 31 when the bicycle brakes are applied. Moreover, the central processing unit ECU 44 comprises a fail-safe means, specifically an abnormality detector 58 as well as a self-diagnosis circuit 59 both forming portions of the ECU 44. Said self-diagnosis circuit 59 and the fail-safe means and, most specifically the abnormaility detector 58 are provided in addition to the motor control circuit 45.

As already mentioned above the control unit 34 also comprises an auxiliary control means 61 which is incorporated to switch ON and OFF the auxiliary electrical devices 56. Moreover, the system is provided with an abnormality display 62 which consists of a warning light or the like. The fail-safe means, specifically abnormality detecting means 58 detects abnormalities in the detection system for detecting the pedal force F or the corresponding torque 2 and the vehicle speed.

Thus, the ECU 44 has various functions including self-diagnosis, abnormality detection and motor control which works with software. The self-diagnosis means 59 checks all operations of the ECU 44 at the time the main switch 52 is switched on and further discriminates whether there is any abnormality in the entire circuit of the control unit 34 and its components under the conditions before the bicycles starting running.

The abnormality detection means 58 as a fail-safe means detects abnormality in the detection system for detecting the pedal force F or torque Q and vehicle speed S as explained hereinafter. The motor control means 45 controls the motor current of the electric motor 31 to the value determined by the pedal force F or the corresponding torque Q and the vehicle speed as described before. If the fail-safe means 58 detects an abnormality in the detection of either the pedal force F or torque Q or vehicle speed S the motor control means 45 sets the motor current to zero to stop the drive of the electric motor 31.

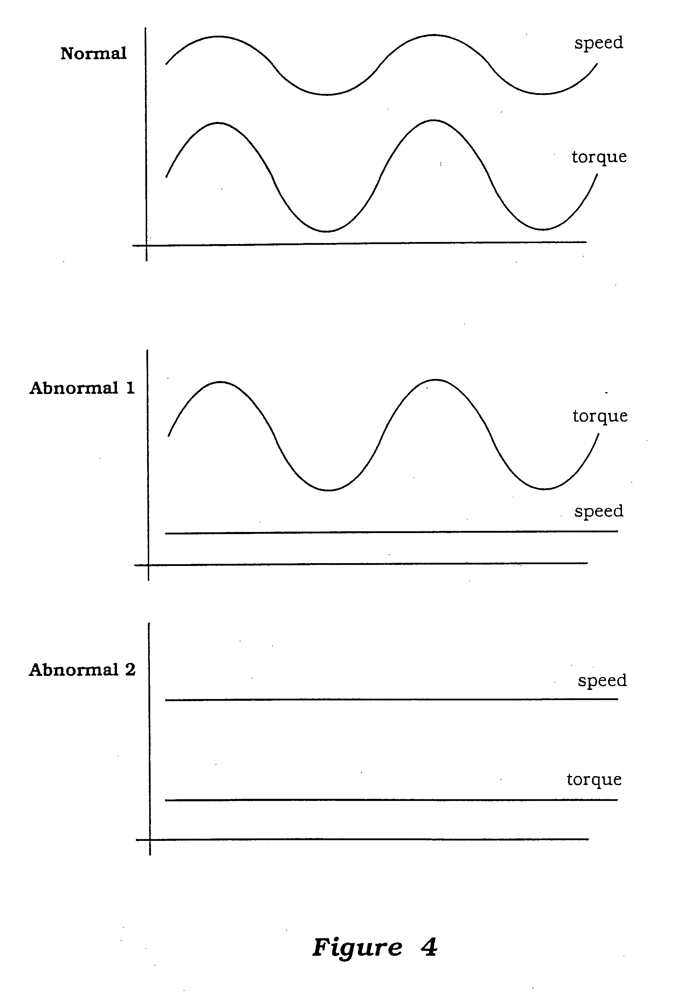

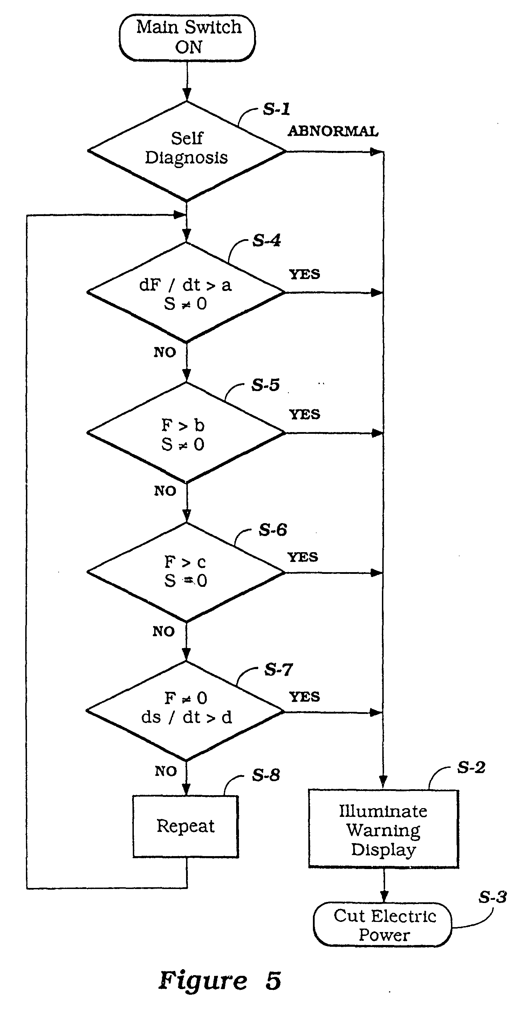

Before referring to the control routine of Figure 5, the way in which abnormal conditions are detected will be described by particular reference to Figure 4 which is a graphical view that shows the condition of the torque output sensed by the torque sensor 35 and the vehicle speed output as outputted by the vehicle speed sensor 36. As shown in the normal curve, the torque varies cyclically assuming a constanct input force and the speed will also vary cyclically but to a much smaller amplitude. The first abnormal condition shown is a condition where the torque input is substantially normal but the indicated vehicle speed is quite low and constant, a condition that could be existent if the speed sensor has failed. The other abnormal condition shows where the indicated speed of the vehicle maintains substnatially constant but is very little indicated torque output which can be a condition indicative of a breaking of a wire in the torque sensor and/or some disabling would cause the motor to be operated constantly. The present system operates to sense these abnormal conditions and then prevent the transmission of electrical power to the electric motor when any of the abnormal conditions are sensed and also to indicate the warning display above referred to.

Referring to Figure 5, the program begins when the main switch is turned on and then moves to the step S1 to perform diagnostic system, which may operate in any known manner, indicates an abnormality, the program moves to the step S2 so as to illuminate the warning display 62 and then moves to the step S3 so as to abort or prevent the supply of any electrical power from the battery 33 to the motor 31 by disabling the output circuit 46 and avoid switching the device 47 so as to energize the motor 31.

Assuming that the self-diagnostic system indicates normal operation the program then moves to the performance of four different types of checking functions indicated at the steps S4, S5, S6 and S7 in sequence. These steps S4, S5, S6 and S7 are shown in a predetermined preferred sequence, but it should be readily apparent to those skilled in the art that other types of sequences can be employed for determining abnormalities utilizing both the torque sensor 35 and the vehicle speed sensor 36.

The first sensing condition determined at the step S4 is to determine if the change in output torque dF in relation to time dt is greater than a predetermined value a when the bicycle is actually moving at a speed indicated by the speed sensor 36. If the change in force in relation to time is greater than the value a, which is determined experimentally, then it is determined that there is a defect in the torque sensor 35 and the program moves to the abnormal routine of illuminating the warning display at the step S2 and cutting electrical power at the step S3.

If, however, no abnormality is determined at the step S4, then another checking step is accomplished at the step S5. This step determines if the actual force F as outputted by the torque sensor 35 is greater than a predetermined force b when the bicycle is traveling and the vehicle speed sensor 36 indicates an actual speed condition. This high force sensed by the force sensor indicates either that there has been an electrical failure in the force sensor or the system has bypassed by the operator to indicate the calling for a larger amount of power assist than desired which could result in overspeed of the bicycle. If this occurs, the program then moves to the abnormal display modes of the steps S2 and S3 as previously described.

Assuming that the two abnormal conditions tested for at the steps S4 and S5 do not exist, then the program moves to the third stage S6, so as to determine if there is a force output from the torque sensor 35 whicle the speed sensor 36 indicates that the bicycle is not moving and the speed is zero. This would indicate that there is a pedal force exerted when the bicycle is held stationary either by the application of the brakes or by placing it in engagement with a fixed object. In either condition, it is not desirable to have the electric motor 31 operated and if this condition is determined the program moves to the abnormal mode of the steps S2 and S3 as afore-described.

Assuming none of the conditions tested for at the steps S4, S5 and S6, are encountered, the program then moves to the step S7 so as to provide a testing of the functioning of the speed sensor and this is done by determining first that the torque sensor 35 outputs a signal and then the rate of change in speed with respect to time (ds/dt). This value is then compared with a preset value d which is the maximum normal anticipated expected change in speed, which again is determined experimentaal. this condition can be caused by a malfunction or wire breakage in the speed sensor 36 and if this condition is determined to be abnormal, the program again moves to the abnormal conditions of steps S2 and S3.

If all of the steps S4, S5, S6 and S7 have indicated no abnormality from either the torque or speed sensors 35 and 36, respectively, the program then moves to the step S8 so as to continue to repeat the test S4, S5, S6 and S7 during the bicycle operation. As noted above, it is not necesary that these steps be described order and additional testing methods to determine the various types of abnormalities noted my be employed or additional abnormalities using these sensors. The tests may be repeated automatically during running or may return to normal running control when the abnormality is determined and this is within the scope of the invention.

It should be readily apparent from the foregoing description that the described embodiments of the invention are very effective in employing the two sensors of the system to determine various types of abnormalities and to protect against the application of electrical power assist under these abnormalities.

While the abnormality detection in the afore-indicated embodiment is made in four stages the present invention is not restricted thereto and is considered to cover all embodiments wherein an abnormality detection is made by the comparison between a human driving power such as the pedal force or pedal torque and the vehicle speed and is not limited to the method of detection in the afore-indicated steps but by the scope of the appended claims. It my also be arranged that the abnormality detection in each stage is repeated at constant intervals while the main switch 52 is on and that the control mode returns automatically to the normal running control of the step as 8 in the routine of Figure 5 when the abnormality does no longer exist. Alternatively, it may also be arranged that the main switch 52 is automatically turned off in the case of any abnormality being detected to stop the entire control.

In the present embodiment the pedal force or torque was detected as the human driving power but it is a matter of course that also hand driving force or torque may be detected in case the present invention is applied to a hand-driven vehicle such as a wheelchair.

## Claims

1. Muscle-operated vehicle, in particular pedal operated vehicle such as a bicycle, having a muscle-operated driving system and an auxiliary electrical power driving system, a detection system including
- sensor means (35,36) detecting in use the vehicle speed and the human driving power driving the vehicle, and
- a control means (34) controlling in use the activation and/or the output of the electrical power driving system according to the changes of the human driving power,
**characterized in that**
said control means (34) comprises an abnormality detecting means (58) detecting in use abnormalities in said detection system by
means comprising preset parameter values to be compared with detected parameter values regarding at least one of the following parameter combinations vehicle speed and human driving power or first derivation of human driving power and a parameter combination of human driving power and the first derivation of vehicle speed, said preset value of parameter combinations represent abnormal relations between said parameters which do not occur under normal operation by muscle power,
means performorming the comparison of the detected values with said preset parameter values according to at least on of said aforementioned parameter combinations and thereby detecting an abnormality,
said control means (34) further comprises a motor control means (45) interrupting the supply of electrical power to the auxiliary electrical power driving system if an abnormality is detected.

2. Muscle-operated vehicle according to claim 1, **characterized in that** said control means (34) is capable to prevent the supply of electrical power to the auxiliary electrical power driving system in case the detected human driving power is substantially normal but the indicated vehicle speed is quite low and substantially constant and therefore abnormal and/or in case the indicated vehicle speed is substantially normal but the indicated human driving power is substantially constant and therefore abnormal.

3. Muscle-operated vehicle as claimed in claim 1 or 2, **characterized in that** a vehicle speed sensor (36, 37) and a force or torque sensor (35) for sensing the human driving power, specifically a pedal force or torque sensor (35) for sensing the pedal force of a pedal-force operated vehicle such as a bicycle, are provided.

4. Muscle-operated vehicle as claimed in at least one of the preceding claims 1 to 3, **characterized in that** the muscle-operated driving system and the auxiliary electrical driving system are disposed in parallel to each other.

5. Muscle-operated vehicle as claimed in at least one of the preceding claims 1 to 4, **characterized in that** the muscle-operated driving system comprises a pedal-operated crankshaft (23) operatively connected to an axle (29) of a driving rear wheel (26) of the vehicle through a transmission including a one-way clutch (38) and a drive shaft (39).

6. Muscle-operated vehicle as claimed in at least one of the preceding claims 1 to 5, **characterized in that** the auxiliary electrical power driving system comprises a battery-fed electrical motor (31) which transmits its energy via a transmission (42) and another one-way clutch to said drive shaft (39) in response to an output signal of the control means, said control means being supplied with sensor signals from a force or torque sensor (35) of the muscle-operated driving system and of the vehicle speed sensor (36).

7. Muscle-operated vehicle as claimed in claim 5 or 6, **characterized in that** the drive shaft (39) is operatively connected to the axle (29) of the rear wheel (26) via another one-way clutch (26).

8. Muscle-operated vehicle as claimed in at least one of the preceding claims 1 to 7, **characterized in that** the control means (34) comprises a central processing unit (44) comprising an electric motor control section (45) and the fail-safe means including an abnormality detector (58) and a self-diagnosis circuit (59) for testing the operation ability of said central processing unit (44).

9. Muscle-operated vehicle as claimed in claim 8, **characterized in that** the control means is provided to receive input signals from a force or torque sensor (35), a vehicle speed sensor (36, 37), a break switch (57) and a main switch (52).

10. Muscle-operated vehicle as claimed in claim 9, **characterized in that** the control means comprises an electric motor drive circuit including a gate circuit (46) for switching a switch circuit (47) comprising a main relay (51) operated through a main switch responsive signal, the battery (33) and the electric motor (31 ).

11. Muscle-operated vehicle as claimed in claim 10, **characterized in that** the main circuit (48) moreover comprises a current detecting shunt (53) connected to the control processing unit (44), a fly wheel diode (49) in parallel to the electric motor (31) and another power source (55) for supplying power to auxiliary electrical devices driven by an auxiliary battery (54).

12. Muscle-operated vehicle as claimed in at least one of the preceding claims 1 to 11, **characterized in that** the fail-safe means senses a variation in relationship of a vehicle speed signal and a force or torque signal from a relationship normally expected.

13. Muscle-operated vehicle as claimed in claim 12, **characterized in that** the fail-safe means senses an abnormality condition in the detection system for detecting the vehicle speed and/or the manual driving force when a change in force or torque per unit time (dF/dt or dQ/dt) sensed by the force or torque sensor exceeds a predetermined value and the vehicle speed sensor provides an output signal indicative that the vehicle is travelling.

14. Muscle-operated vehicle as claimed in claim 12 or 13, **characterized in that** the fail-safe means senses abnormality condition in the detection system for detecting the vehicle speed and/or the manual driving force or torque when an amount of force or torque sensed by the force or torque sensor exceeds a predetermined value and the vehicle speed sensor provides an output signal indicative that the vehicle is travelling.

15. Muscle-operated vehicle as claimed in at least one of the claims 12 to 14, **characterized in that** the fail-safe means senses an abnormality condition in the detection system for detecting the vehicle speed and/or the manual driving force or torque when the amount of force or torque sensed by the force or torque sensor exceeds a predetermined value and the vehicle is held stationary as is indicated by a failure of the vehicle speed sensor to output a signal.

16. Muscle-operated vehicle as claimed in at least one of the claims 12 to 15, **characterized in that** the fail-safe means senses an abnormality condition in the detection system for detecting the vehicle speed and/or the manual driving force or torque when the change in vehicle speed per unit time sensed by the speed sensor is greater than a predetermined value and the force or torque sensor indicates the output of a force or torque.

## Patentansprüche

1. Muskelbetätigtes Fahrzeug, insbesondere ein pedalbetätigtes Fahrzeug, wie z. B. ein Fahrrad, das ein muskelbetätigtes Antriebssystem und ein Hilfsantriebssystem mit Elektroenergie hat, wobei ein Erfassungssystem enthält
- eine Sensoreinrichtung (35, 36), die im Gebrauch die Fahrzeuggeschwindigkeit und die Menschenantriebskraft, die das Fahrzeug antreibt, erfasst, und
- eine Steuerungseinrichtung (34), die im Gebrauch die Aktivierung und / oder die Ausgangsleistung des Elektroenergie- Antriebsystems entsprechend der Veränderungen der Menschenantriebskraft steuert
**dadurch gekennzeichnet, dass** die Steuerungseinrichtung (34) eine Abnormalitäts- Erfassungseihrichtung (58) aufweist, die im Gebrauch Abnormalitäten in dem Erfassungssystem erfasst durch eine Einrichtung, die voreingestellte Parameter-werte aufweist, zum Vergleich mit den erfassten Parameterwerten bezüglich zumindest einer der folgenden Parameterkombinationen Fahrzeuggeschwindigkeit und Menschenantriebskraft oder erster Ableitung der Menschenantriebskraft oder einer Parameterkombination von Menschenantriebskraft und erster Abteilung der Fahrzeuggeschwindigkeit, wobei die voreingestellten Werte der Parameterkombinationen abnormale Beziehungen zwischen diesen Parametern repräsentieren, die im Normalbetrieb durch Muskelkraft nicht auftreten,
eine Einrichtung, die den Vergleich der erfassten Werte mit den voreingestellten Parameterwerten entsprechend zumindest einer der vorerwähnten Parameterkombinationen ausführt und dadurch eine Abnormalität erfasst,
wobei die Steuerungseinrichtung (34) außerdem eine Motorsteuerungseinrichtung (45) aufweist, die die Zuführung von elektrischer Energie zu dem Elektroenergie-Hilfsantriebssystem unterbricht, wenn eine Abnormalität erfasst wird.

2. Muskelbetätigtes Fahrzeug nach Anspruch 1, **dadurch gekennzeichnet, dass** die Steuereinrichtung (34) in der Lage ist, die Zuführung von elektrischer Energie zu dem Elektroenergie- Hilfsantriebssystem in dem Fall zu verhindern, dass die erfasste Menschenantriebskraft im Wesentlichen normal ist, aber die angezeigte Fahrzeuggeschwindigkeit ziemlich gering und im Wesentlichen konstant und demzufolge abnormal ist, und /oder in dem Fall, dass die angezeigte Fahrzeuggeschwindigkeit im Wesentlichen normal ist, aber die angezeigte Menschenantriebskraft im Wesentlichen konstant und demzufolge abnormal ist.

3. Muskelbetätigtes Fahrzeug nach Anspruch 1 oder 2, **dadurch gekennzeichnet, dass** ein Fahrzeuggeschwindigkeitssensor (36, 37) und ein Kraft- oder Drehmomentsensor (35) zum Erfassen der Menschenantriebskraft, insbesondere einer Pedalkraft, oder ein Drehmomentsensor (35) zum Erfassen der Pedalkraft eines pedalkraftbetätigten Fahrzeuges, wie z. B. eines Fahrrades, vorgesehen sind.

4. Muskelbetätigtes Fahrzeug nach zumindest einem der vorhergehenden Ansprüche 1 bis 3, **dadurch gekennzeichnet, dass** das muskelbetätigte Antriebssystem und das elektrische Hilfsantriebssystem zueinander parallel angeordnet sind.

5. Muskelbetätigtes Fahrzeug nach zumindest einem der vorhergehenden Ansprüche 1 bis 4, **dadurch gekennzeichnet, dass** das muskelbetätigte Antriebssystem eine pedalbetätigte Kurbelwelle (23) aufweist, betrieblich verbunden mit einer Achse (29) eines antreibenden Hinterrades (26) des Fahrzeuges durch ein Getriebe, das eine Freilaufkupplung (38) und eine Antriebswelle (39) enthält.

6. Muskelbetätigtes Fahrzeug nach zumindest einem der vorhergehenden Ansprüche 1 bis 5, **dadurch gekennzeichnet, dass** das elektrische Hilfsantriebssystem einen batteriegespeisten Elektromotor (31) aufweist, der seine Energie über ein Getriebe (42) und eine weitere Freilaufkupplung auf die Antriebswelle (39) in Abhängigkeit von einem Ausgangssignal der Steuereinrichtung überträgt, wobei die Steuereinrichtung mit Sensorsignalen von einem Kraft- oder Drehmomentsensor (35) des muskelbetätigten Antriebssystems und eines Fahrzeuggeschwindigkeitssensors (36) gespeist wird.

7. Muskelbetätigtes Fahrzeug nach Anspruch 5 oder 6, **dadurch gekennzeichnet, dass** die Antriebswelle (39) betrieblich mit der Achse (29) des Hinterrades (26) über eine weitere Freilaufkupplung (26) verbunden ist.

8. Muskelbetätigtes Fahrzeug nach zumindest einem der vorhergehenden Ansprüche 1 bis 7, **dadurch gekennzeichnet, dass** die Steuereinrichtung (34) eine Zentralrecheneinheit (44) aufweist, mit einem Elektromotor- Steuerabschnitt (45) und die Ausfallsicherheitseinrichtung aufweist, die einen Abnormalitätsdetektor (58) und einen Selbstdiagnose- Schaltkreis (59) zum Prüfen der Betriebsfähigkeit der Zentralrecheneinheit (44) enthält.

9. Muskelbetätigtes Fahrzeug nach Anspruch 8, **dadurch gekennzeichnet, dass** die Steuereinrichtung vorgesehen ist Eingangssignale von einem Kraft- oder Drehmomentsensor (35), einem Fahrzeuggeschwindigkeitssensors (36, 37), einem Bremsschalter (57) und einem Hauptschalter (52) zu empfangen.

10. Muskelbetätigtes Fahrzeug nach Anspruch 9, **dadurch gekennzeichnet, dass** die Steuereinrichtung einen Elektromotor- Antriebsschaltkreis aufweist, der eine Gatterschaltung (46) zum Schalten eines Schalterschaltkreises (47) aufweist, mit einem Hauptrelais (51), betätigt durch ein Hauptschalter- abhängiges Signal, die Batterie (33) und den Elektromotor (31).

11. Muskelbetätigtes Fahrzeug nach Anspruch 10, **dadurch gekennzeichnet, dass** der Hauptschaltkreis (48) überdies einen Stromerfassungsnebenwiderstand (53), verbunden mit der Steuerungsberechnungseinheit (44), aufweist, eine Schwungraddiode (49), parallel zu dem Elektromotor (31) und eine weitere Energiequelle (55) zum Energiezuführen zu elektrischen, durch eine Hilfsbatterie (54) angetriebene Hilfsvorrichtungen.

12. Muskelbetätigtes Fahrzeug nach zumindest einem der vorhergehenden Ansprüche 1 bis 11, **dadurch gekennzeichnet, dass** die Ausfallssicherheitseinrichtung eine Veränderung in der Beziehung eines Fahrzeuggeschwindigkeitssignals und eines Kraft- oder Drehmomentsignals gegenüber einer Beziehung, die normalerweise erwartet wird, erfasst.

13. Muskelbetätigtes Fahrzeug nach Anspruch 12, **dadurch gekennzeichnet, dass** die Ausfallssicherheitseinrichtung einen abnormalen Zustand in dem Erfassungssystem zum Erfassen der Fahrzeuggeschwindigkeit und / oder der manuellen Antriebskraft erfasst, wenn eine Veränderung in der Kraft oder im Drehmoment pro Zeiteinheit (dF/dt oder DQ/dt), erfasst durch den Kraft- oder Drehmomentsensor, einen vorbestimmten Wert überschreitet und der Fahrzeuggeschwindigkeitssensor ein Ausgangssignal abgibt, das anzeigt, dass das Fahrzeug in Bewegung ist.

14. Muskelbetätigtes Fahrzeug nach Anspruch 12 oder 13, **dadurch gekennzeichnet, dass** die Ausfallssicherheitseinrichtung einen abnormalen Zustand in dem Erfassungssystem zum Erfassen der Fahrzeuggeschwindigkeit und/oder der manuellen Antriebskraft oder des Drehmomentes erfasst, wenn ein Betrag der Kraft oder des Drehmomentes, erfasst durch den Kraft- oder Drehmomentsensor, einen vorbestimmten Wert überschreitet und der Fahrzeuggeschwindigkeitssensor ein Ausgangssignal abgibt, das anzeigt, dass das Fahrzeug in Bewegung ist.

15. Muskelbetätigtes Fahrzeug nach zumindest einem der Ansprüche 12 bis 14, **dadurch gekennzeichnet, dass** die Ausfallssicherheitseinrichtung einen abnormalen Zustand in dem Erfassungssystem zum Erfassen der Fahrzeuggeschwindigkeit und / oder der Antriebskraft oder eines Drehmomentes erfasst, wenn der Betrag der Kraft oder des Drehmomentes, erfasst durch den Kraft- oder den Drehmomentsensor, einen vorbestimmten Wert überschreitet, und das Fahrzeug stationär gehalten wird, wie durch ein Versagen des Fahrzeuggeschwindigkeitssensors, ein Signal auszugeben, angezeigt wird.

16. Muskelbetätigtes Fahrzeug nach zumindest einem der Ansprüche 12 bis 15, **dadurch gekennzeichnet, dass** die Ausfallssicherheitseinrichtung einen abnormalen Zustand in dem Erfassungssystem zum Erfassen der Fahrzeuggeschwindigkeit und / oder der manuellen Antriebskraft oder des Drehmomentes erfasst, wenn die Veränderung in der Fahrzeuggeschwindigkeit pro Zeiteinheit, erfasst durch den Fahrzeuggeschwindigkeitssensor, größer als ein vorbestimmter Wert ist, und der Kraft- oder der Drehmomentsensor die Ausgabe einer Kraft oder eines Drehmomentes anzeigt.

## Revendications

1. Véhicule actionné par des muscles, en particulier un véhicule actionné par une pédale tel qu'une bicyclette, comportant un système d'entraînement actionné par des muscles et un système d'entraînement auxiliaire à énergie électrique, un système de détection comprenant :
- des dispositifs à capteur (35, 36) détectant, pendant l'utilisation, la vitesse du véhicule et la puissance d'entraînement humaine commandant le véhicule et
- un dispositif de commande (34) commandant, pendant l'utilisation, l'activation et/ou le rendement du système d'entraînement à énergie électrique en fonction des variations de la puissance d'entraînement humaine,
**caractérisé en ce que** ledit dispositif de commande (34) comprend un dispositif de détection des anomalies (58) détectant, pendant l'utilisation, les anomalies dans ledit système de détection par :
- des dispositifs comprenant des valeurs de paramètre prédéfinies à comparer à des valeurs de paramètre détectées concernant au moins l'une des combinaisons de paramètres suivantes, vitesse du véhicule et puissance d'entraînement humaine ou première source de la puissance d'entraînement humaine et une combinaison de paramètres de la puissance d'entraînement humaine et de la première source de la vitesse du véhicule, lesdites valeurs prédéfinies des combinaisons de paramètres représentent des relations anormales entre lesdits paramètres qui ne se produisent pas pendant un fonctionnement normal par la puissance musculaire,
- des dispositifs exécutant la comparaison des valeurs détectées avec lesdites valeurs de paramètre prédéfinies conformément à au moins l'une desdites combinaisons de paramètres mentionnées précédemment et détectant par conséquent une anomalie,
- ledit dispositif de commande (34) comprend en outre un dispositif de commande du moteur (45) interrompant l'alimentation en énergie électrique vers le système d'entraînement auxiliaire électrique si une anomalie est détectée.

2. Véhicule actionné par des muscles selon la revendication 1, **caractérisé en ce que** ledit dispositif de commande (34) est capable d'empêcher l'alimentation en énergie électrique vers le système d'entraînement auxiliaire à énergie électrique dans le cas où la puissance d'entraînement humaine détectée serait normale pour l'essentiel mais la vitesse du véhicule indiquée serait très faible et constante pour l'essentiel et, par conséquent, anormale et/ou dans le cas où la vitesse du véhicule indiquée serait normale pour l'essentiel mais la puissance d'entraînement humaine indiquée serait constante pour l'essentiel et, par conséquent, anormale.

3. Véhicule actionné par des muscles selon la revendication 1 ou 2, **caractérisé en ce que** sont prévus un capteur de la vitesse du véhicule (36, 37) et un capteur de force ou de couple (35) pour la détection de la puissance d'entraînement humaine, plus précisément un capteur de la force ou du couple d'une pédale (35) pour la détection de la force de la pédale d'un véhicule actionné par la force d'une pédale tel qu'une bicyclette.

4. Véhicule actionné par des muscles selon au moins l'une des revendications précédentes 1 à 3, **caractérisé en ce que** le système d'entraînement actionné par des muscles et le système d'entraînement électrique auxiliaire sont disposés de manière parallèle l'un par rapport à l'autre.

5. Véhicule actionné par des muscles selon au moins l'une des revendications précédentes 1 à 4, **caractérisé en ce que** le système d'entraînement actionné par des muscles comprend un vilebrequin (23) actionné par une pédale, fonctionnellement relié à un essieu (29) d'une roue motrice arrière (26) du véhicule par l'intermédiaire d'une transmission comprenant un embrayage unidirectionnel (38) et un arbre de commande (39).

6. Véhicule actionné par des muscles selon au moins l'une des revendications précédentes 1 à 5, **caractérisé en ce que** le système d'entraînement auxiliaire à énergie électrique comprend un moteur électrique alimenté par une batterie (31) qui transmet son énergie par l'intermédiaire d'une transmission (42) et d'un autre embrayage unidirectionnel vers ledit arbre de commande (39) en réponse à un signal de sortie du dispositif de commande, ledit dispositif de commande étant alimenté en signaux de capteur provenant d'un capteur de force ou de couple (35) du système d'entraînement actionné par des muscles et du capteur de la vitesse du véhicule (36).

7. Véhicule actionné par des muscles selon la revendication 5 ou 6, **caractérisé en ce que** l'arbre de commande (39) est fonctionnellement relié à l'essieu (29) de la roue arrière (26) par l'intermédiaire d'un autre embrayage unidirectionnel (26).

8. Véhicule actionné par des muscles selon au moins l'une des revendications précédentes 1 à 7, **caractérisé en ce que** le dispositif de commande (34) comprend une unité centrale de traitement (44) comportant une section de commande du moteur électrique (45) et le dispositif de sûreté après défaillance comprenant un détecteur d'anomalies (58) et un circuit à diagnostic automatique (59) pour tester la capacité de fonctionnement de ladite unité centrale de traitement (44).

9. Véhicule actionné par des muscles selon la revendication 8, **caractérisé en ce que** le dispositif de commande est prévu pour recevoir des signaux d'entrée provenant d'un capteur de force ou de couple (35), d'un capteur de la vitesse du véhicule (36, 37), d'un interrupteur (57) et d'un commutateur principal (52).

10. Véhicule actionné par des muscles selon la revendication 9, **caractérisé en ce que** le dispositif de commande comprend un circuit de commande du moteur électrique comprenant un circuit de barrière (46) pour commuter un circuit d'interrupteur (47) comportant un relais principal (51) actionné par un signal répondant au commutateur principal, la batterie (33) et le moteur électrique (31).

11. Véhicule actionné par des muscles selon la revendication 10, **caractérisé en ce que** le circuit principal (48) comprend de plus un circuit dérivé détectant le courant (53) relié à l'unité centrale de traitement (44), une diode à volant (49) parallèlement au moteur électrique (31) et une autre source d'énergie (55) pour l'alimentation en énergie vers des dispositifs électriques auxiliaires entraînés par une batterie auxiliaire (54).

12. Véhicule actionné par des muscles selon au moins l'une des revendications précédentes 1 à 11, **caractérisé en ce que** le dispositif de sûreté après défaillance détecte une variation dans la relation entre un signal de la vitesse du véhicule et un signal de force ou de couple en comparaison avec une relation normalement attendue.

13. Véhicule actionné par des muscles se lon la revendication 12, **caractérisé en ce que** le dispositif de sûreté après défaillance détecte une condition d'anomalie dans le système de détection servant à détecter la vitesse du véhicule et/ou la force de commande manuelle lorsqu'une modification au niveau de la force ou du couple par temps unitaire (dF/dt ou dQ/dt), captée par le capteur de force ou de couple, dépasse une valeur prédéterminée et le capteur de la vitesse du véhicule fournit un signal de sortie indiquant que le véhicule se déplace.

14. Véhicule actionné par des muscles selon la revendication 12 ou 13, **caractérisé en ce que** le dispositif de sûreté après défaillance détecte une condition d'anomalie dans le système de détection servant à détecter la vitesse du véhicule et/ou la force ou le couple de commande manuelle lorsqu'une quantité de force ou de couple, captée par le capteur de force ou de couple, dépasse une valeur prédéterminée et le capteur de la vitesse du véhicule fournit un signal de sortie indiquant que le véhicule se déplace.

15. Véhicule actionné par des muscles selon au moins l'une des revendications 12 à 14, **caractérisé en ce que** le dispositif de sûreté après défaillance détecte une condition d'anomalie dans le système de détection servant à détecter la vitesse du véhicule et/ou la force ou le couple de commande manuelle lorsque la quantité de force ou de couple, captée par le capteur de force ou de couple, dépasse une valeur prédéterminée et le véhicule est maintenu stationnaire comme indiqué par une incapacité du capteur de la vitesse du véhicule à émettre un signal.

16. Véhicule actionné par des muscles selon au moins l'une des revendications 12 à 15, **caractérisé en ce que** le dispositif de sûreté après défaillance détecte une condition d'anomalie dans le système de détection servant à détecter la vitesse du véhicule et/ou la force ou le couple de commande manuelle lorsque la modification de la vitesse du véhicule par temps unitaire, captée par le capteur de vitesse, est supérieure à une valeur prédéterminée et le capteur de force ou de couple indique la sortie d'une force ou d'un couple.
